# EUROPEAN PATENT SPECIFICATION

(11) **EP 4 508 351 B1**
(45) Date of publication and mention of the grant of the patent: **14.10.2026**
(21) Application number: 23716331.6
(22) Date of filing: 06.04.2023
(51) Int. Cl.: F16L 3/02

(54) **METHOD OF CONNECTING TWO PIPES USING A HOLDER AND A CLAMP**
VERFAHREN ZUM VERBINDEN VON ZWEI ROHREN MIT EINEM HALTER UND EINER KLAMMER
METHODE POUR CONNECTER DEUX TUYAUX AVEC UN SUPPORT ET UN COLLIER

(30) Priority: 14.04.2022 GB 202205566
(43) Date of publication of application: 19.02.2025
(73) Proprietor: Cytiva Sweden AB, 751 84 Uppsala (SE)
(72) Inventor: MARTELEUR, Klas, 75184 Uppsala (SE); ALRIKSSON, Johan, 75184 Uppsala (SE)
(74) Representative: Wu, Ping
(86) International application number: PCT/EP2023/059249
(87) International publication number: WO 2023/198626

(56) References cited:
- WO-A1-93/00202
- CN-U- 204 907 966
- GB-A- 2 290 034
- US-A1- 2003 094 809

## Description

### TECHNICAL FIELD OF THE INVENTION

The present invention relates to a holder for a clamp of a bioprocessing pipe connection device, a set of such holders and a system comprising at least one fluid port, wherein said system comprises at least one such holder. The present invention is a method for connecting two pipes.

### BACKGROUND

When two bioprocessing pipes are to be connected a pipe connection device is often used. For example, pipe connections may be desired when various bioprocessing systems such as chromatography systems, bio-reactor systems, fluid mixing systems, filtration systems (e.g. tangential flow filters (TFF) or the like), fill and finish systems, etc. (or combinations of such or parts thereof) are assembled. Such a pipe connection device comprises often a clamp which is configured for enclosing and clamping said pipe connection device around the connection of the two pipes. A tri-clamp fitting is an example of such a pipe connection device. A tri-clamp fitting comprises two flanged parts which are provided to the two pipes to be connected, a gasket to be provided in between the two flanged parts and a clamp for enclosing and clamping the two flanges around the gasket. The clamp is tightened around the pipe connection. The different parts need to be held in correct aligning while the clamp is provided and tightened. This can be tricky and may require the use of two or more hands and/or further tools, clamps, clips etc. Other types of clips and connectors for use in non-bioprocessing applications, such as infant products, vehicle fuel piping, tool holders etc. are also known, for example, from CN 204 907 966 U, GB 2 290 034 A, US 2003/094809 A1 and WO 93/00202 A1.

### SUMMARY

An object of the present invention is to facilitate the connection of a pipe to a fluid port of a bioprocessing system.

More specifically, the present invention is a method according to independent claim 1. Advantageous embodiments of the invention are defined in the dependent claims.

Hereby a clamp can be supported by the holder while the other parts of the pipe connection device and the two pipes to be connected are provided into right position for connection. The clamp can then, directly form the supported position, be closed and tightened around the pipe connection. Hereby pipe connection is facilitated in that fewer parts need to be held by the person who is connecting the pipes. The holder comprises a connection part which is connected to one of the pipes to be connected, which in some examples is a fluid port of a system. Hereby an easy connection directly to the pipe or fluid port of the system is provided. The separating part of the holder provides the clamp supporting part at a suitable distance from the pipe or fluid port such that the clamp is held at a suitable distance during connection of the pipe connection device.

In one embodiment of the invention the pipe connection device is a Tri-Clamp fitting or an I-line fitting. Hereby, in this embodiment the holder is designed and dimensioned in relation to a clamp used for such a fitting.

In one embodiment of the invention the connection part is configured for being connected to a fluid port of a system, to which fluid port a pipe connection device is to be used for connecting a pipe to the system, whereby said first pipe is the fluid port. Hereby one or more holders according to the invention can easily be provided to fluid ports of a system for easy connection of pipes and tubes to the system.

In one embodiment of the invention said clamp supporting part comprises a curved support bar in which the clamp can be held, whereby the curved support bar has a width, F, which is slightly larger than a width, G, of the clamp.

In one embodiment of the invention the curved support bar comprises a rim along one long side edge, which rim is provided for preventing a clam positioned in the clamp supporting part from sliding out from the curved support bar.

In one embodiment of the invention the clamp supporting part comprises a drain. Hereby any possible leaking fluid can be efficiently removed.

In one embodiment of the invention said connection part comprises two opposing resilient arms configured for being snap fitted to one of the two pipes to be connected. Hereby an easy connection of the holder to one of the pipes, for example a fluid port of a system, is provided. In one embodiment of the invention said connection part comprises a locking feature by which the holder can be locked into a fixed position when the holder is attached to one of the two pipes to be connected.

In one embodiment of the invention the holder is sized and configured to be used with a standard Tri-Clamp fitting or a Mini Tri-Clamp fitting.

In one embodiment of the invention said clamp supporting part comprises at least a part of the clamp.

In one embodiment of the system of the invention said connection part is permanently attached to said at least one fluid port of the system.

In one embodiment of the system of the invention said system is a bioprocessing apparatus or a part of a bioprocessing apparatus.

### BRIEF DESCRIPTION OF THE DRAWINGS

Figure 1a is a perspective view of a holder used in one embodiment of the invention.
Figure 1b is a schematic view of a pipe connection device for which the holder is suitable to use.
Figure 2 is a perspective view of the holder as shown in Figure 1 connected to a fluid port of a system.
Figure 3 is a perspective view of two holders as shown in Figure 1 connected to a fluid port each of a system, wherein also clamps of pipe connection devices are provided to the fluid ports of the system.
Figure 4 is a cross section of two holders as shown in Figure 1 and clamps of pipe connection devices provided to fluid ports of a system.
Figure 5 is a front view, partly in cross section of a holder as shown in Figure 1 and a clamp of a pipe connection device as provided to a fluid port of a system.
Figures 6a-6e show schematically five different alternatives of connection parts of holders that can be used in the method according to the invention.
Figures 7a and 7b show schematically two different holders according to other embodiments of the invention.

### DETAILED DESCRIPTION OF EMBODIMENTS

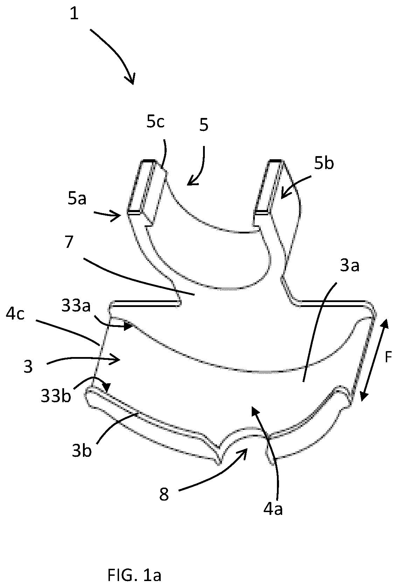

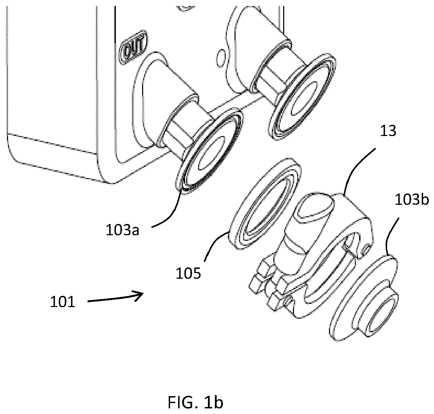

The present invention involves a holder for a clamp of a pipe connection device. Such a clamp is configured for enclosing and clamping the pipe connection device around a pipe connection, i.e. a connection of two pipes or tubes or a connection between a pipe or a tube to a fluid port of a system, for example in a bioprocess apparatus. When referring to pipes and connection of two pipes in the present disclosure and claims the term pipes comprises both pipes and tubes. One example of a pipe connection device for which the holder according to the invention is suitable to use is a pipe connection device which is called Tri-Clamp fitting (also called Tri-Clover or TC connector). Another example is an I-Line fitting. Figure 1a is a perspective view of a holder 1 according to one embodiment of the invention. Figure 1b shows schematically a pipe connection device 101, such as for example a Tri-Clamp fitting, for which the holder 1 according to the invention is suitable to use. The holder 1 according to the invention is configured for being attached to one of the two pipes to be connected by the pipe connection device, which could also be a fluid port 11 of a system 10. The pipe connection device 101 typically comprises two ferrules or flanges, here called a first flanged part 103a and a second flanged part 103b, which are connected one to each of the two pipes to be connected (In Figure 1b one of the pipes to be connected is a fluid port). In the example as shown in Figure 1b the first flanged part 103a is attached to the fluid port 11 to which the holder 1 is configured to be attached and the second flanged part 103b is connected to the pipe to be connected to the fluid port (not shown). The pipe connection device 101 further comprises a gasket 105 and a clamp 13 to mechanically hold the connection together. The clamp may in some examples comprise two halves having conical inner surfaces which will force the first and second flanged parts 103a, 103b towards each other and compress the gasket 105 when the two halves of the clamp are tightened to each other. The holder 1 according to the invention is configured for supporting such a clamp 13, for example a Tri-Clamp clamp 13, before and during connection of two pipes by use of the pipe connection device 101.

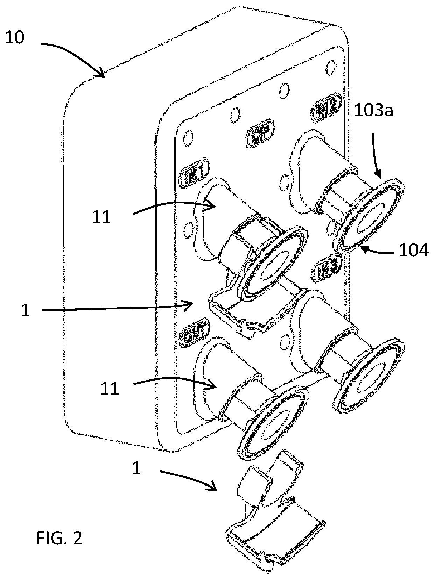

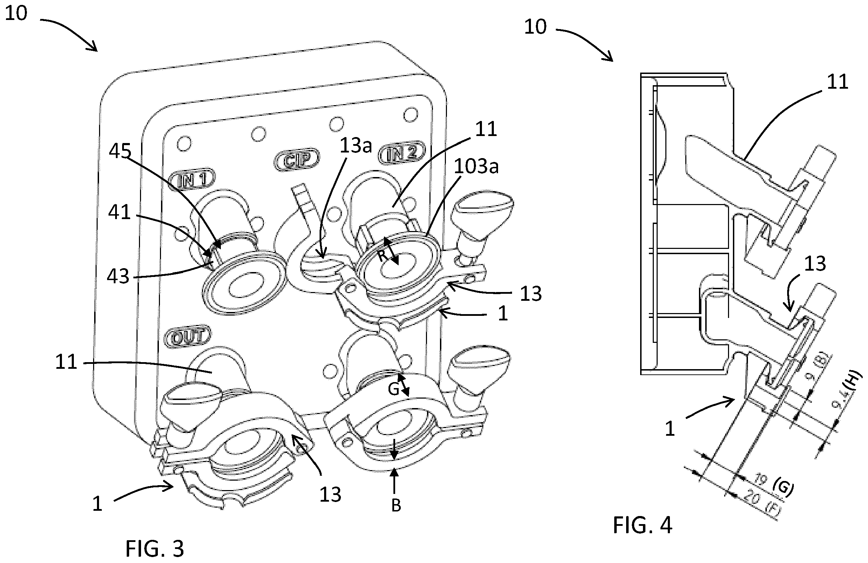

Figure 2 is a perspective view of the holder 1 as shown in Figure 1 connected to a fluid port 11, such as an inlet or an outlet, of a system 10. Figure 3 is a perspective view of two holders 1 as shown in Figure 1 connected to a fluid port 11 each of a system 10, wherein also clamps 13 of pipe connection devices 101 are provided to the fluid ports 11 of the system 10. The system 10 can for example be a bioprocessing apparatus or a part of a bioprocessing apparatus. In Figure 4 two fluid ports 11 of a system 10 with clamps 13 and holders 1 provided are shown in cross section. In Figure 4 some specific dimensions are given, however these are of course only given as examples. The dimensions can vary within the scope of the invention and also for Tri-Clamp fittings there are different sizes available. The dimensions given as examples in Figure 4 are however given in relation to a Tri-Clamp fitting of standard size, also called TC or Tri Clover.

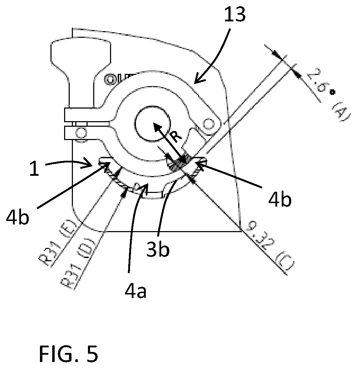

Figure 5 is a front view, partly in cross section of a holder 1 as shown in Figure 1 and a clamp 13 of a pipe connection device 101 as provided to a fluid port 11 of a system.

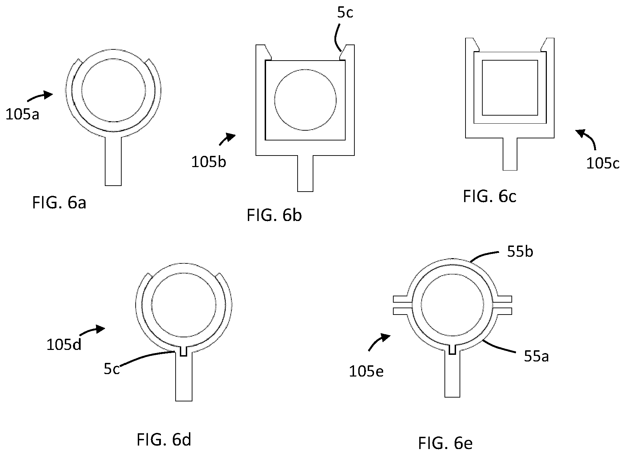

Now with reference to all the drawings, the invention will be described in more details. The holder 1 as shown in Figures 1-5 is only one embodiment of a holder according to the invention. There are many details which can be changed within the scope of the invention which will be discussed in more details below, for example with reference to Figures 6a-6e.

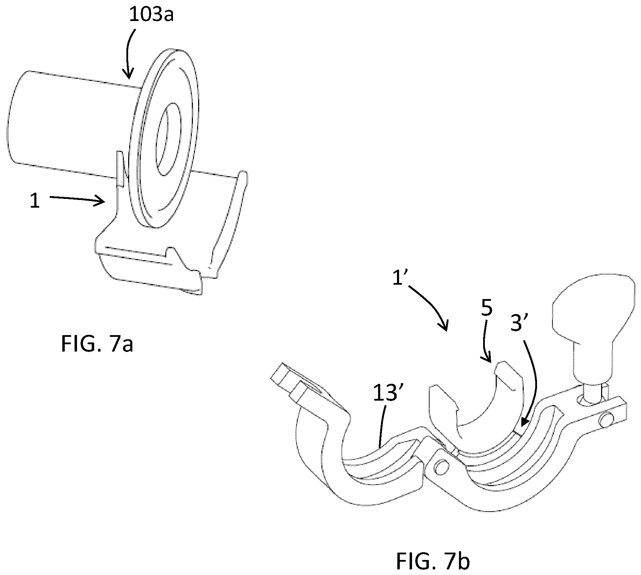

The holder 1 comprises a clamp supporting part 3 configured for supporting and holding the clamp in a supported position. In some embodiments of the invention, as the embodiments shown in Figures 1-5 and 7a, the clamp 13 can be provided into the clamp supporting part 3 and be held by the clamp supporting part 3 before the pipes are connected. In another embodiment of the invention, which is shown in Figure 7b, the clamp supporting part 3' of the holder 1' instead comprises the clamp 13', whereby the clamp 13' can be integrally formed in the clamp supporting part 3'. The holder 1; 1' comprises furthermore a connection part 5 configured for being attached to a first pipe of the two pipes to be connected by the pipe connection device 101. In the embodiments as shown in Figures 1-5 the first pipe is a fluid port 11 and hereby the connection part 5 is configured for being attached to the fluid port 11 of a system 10. A pipe connection device 101 is to be used for connecting a pipe to the system 10. The holder 1 comprises furthermore a separating part that connects said clamp supporting part 3 and said connection part 5. The separating part 7 is configured for providing said clamp supporting part 3 at a specific distance from the first pipe to which the connection part 5 is attached when the connection part is attached to said first pipe, i.e. from said fluid port 11 in Figures 2-5. Said specific distance is such that a clamp 13 of a pipe connection device 101 can be provided into the clamp supporting part 3 (if the clamp is separate and not integrally formed in the holder as shown in Figure 7b) and such that the clamp 13 will be held by the clamp supporting part 3 close to the pipes/fluid port 11 such that the clamp 13 can be closed for clamping the pipe connection device 101 directly from the supported position in the clamp supporting part 3.

In the following the use of a holder 1 according to the invention for a connection of a pipe or a tube to a fluid port 11 of a system 10 will be described. However, the situation could as well be the connection of two pipes or two tubes as described above. The fluid port 11 is provided with the first flanged part 103a which is a part of the pipe connection device 101. The holder 1 according to the invention is connected to the fluid port 11. A distance between an outer periphery 104 of the first flanged part 103a and the clamp supporting part 3 of the holder 1 needs to be large enough for allowing the clamp 13 of the pipe connection device 101 to be inserted into position in the holder 1 and small enough for preventing the clamp 13 from sliding out by accident and for allowing the clamp 13 to be closed around the pipe connection directly from the held position in the holder 1, i.e. without being lifted from the holder. This distance between an outer periphery 104 of the first flanged part 103a and the clamp supporting part 3 can for example be within a range of 5-15 mm. The clamp supporting part 3 comprises suitably a curved support bar 3a which is bent such that it partly surrounds the fluid port 11 to which the holder 1 is attached. Hereby a distance between the outer periphery 104 of the first flanged part 103a and the curved support bar 3a is substantially the same at all positions of the curved support bar 3a and suitably within the range of 5-15 mm. If the distance range instead is given for a distance between a center of the fluid port 11 and the supporting part 3 this could for example be within a range of 1,2*R-2,5*R, where R is the radius of the first flanged part 103a.

Suitably the clamp 13 needs to be twisted for inserting it into the holder 1 such that an inner wall 13a (seen in Figure 3) of the clamp 13 is provided behind the first flanged part 103a of the pipe connection device 101, where behind here is the same as closer to the system 10, i.e. in between the first flanged part 103a and the system 10. Hereby, the clamp 13 can be twisted into position and it cannot be removed from that position without twisting it back. In this way the clamp 13 cannot fall out by accident.

In Figure 4 a thickness B of the clamp 13 is marked. The measured value of 9 mm is only an example and can vary for different clamps 13. Another marked distance is a distance H between an inner surface of the curved support bar 3a of the supporting part 3 of the holder 1 and the clamp 13 when the clamp is closed around the pipe connection. This distance is here measured to be 9.4 mm but this is only an example. This distance can suitably correspond substantially to the thickness B of the clamp 13. For example B-H=±2 mm.

The clamp supporting part 3 comprises suitably a curved support bar 3a in which the clamp can be held, as shown in the embodiment of Figure 1a. A curved support bar 3a is suitable in order to be a support for the clamp 13 which may comprise two curved parts which together enclose the pipe connection when the clamp is closed. The bending radius D of the curved support bar 3a can be substantially the same as a bending radius E for the clamp 13, which is shown in Figure 5. The bending radius D for the curved support bar 3a and the bending radius E for the part of the clamp 13 which is provided in the holder 1 are here the same. In this example the bending radius is 31 mm which is only given as an example. Substantially the same could for example be that D/E is within a range of about 1.05-0.9.

The curved support bar 3a has suitably a width F which is slightly larger than a width G of the clamp 13 (can be seen in Figures 1, 3 and 4). Slightly larger can for example be 1-10% larger or 0.5-3 mm larger, corresponding to at least a compression of the gasket 105 of the pipe connection device 101. The width F of the support bar 3a is adapted such that the clamp 13 can move axially and radially relative the flanged part 103a of the pipe connection device 101 without causing restrictions when applying the gasket 105 and mating the pipe connection device 101. The curved support bar 3a can have substantially the same bending radius as the clamp 13 as described above. However, a clamp 13 of a tri-clamp fitting is often not completely circular but comprises two halves which are connected to each other in one end by a hinge and can be locked together in the other end after connection of the tri-clamp fitting by for example a tightening screw. The two halves of the clamp comprise each a curved middle part having a certain radius. Outside this middle part the ends are flattening out towards the connection points (hinge and tightening screw). The support bar 3a can in some embodiments of the invention have a form corresponding to the form of one half of the clamp 13 with a curved middle part 4a and flattening ends 4b on each side of the middle part 4a (see Figure 5). The middle part 4a can have a bend with a radius corresponding substantially to the bending radius of the middle part of one of the halves of the clamp 13. Corresponding substantially can mean for example not more than 5% larger than a radius E of the clamps 13 middle portion and not less than 10% smaller than the radius E of the clamps 13 middle portion.

In Figure 5 it can be seen that a flattening end 4b of the support bar 3a suitably is provided such that the angle A between the direction of the flattening end 4b and a tangent along the clamp 13 at this position close to the connection between the two halves of the clamp 13 needs to be more than 0° for allowing space for insertion of the clamp 13 into the holder 1. In this example the angle is 2.6°, just given as an example.

In the embodiment as shown in Figures 1-5 the curved support bar 3a is attached along one of its long side edges 33a to the separating part 7 and comprises a rim 3b along the opposite long side edge 33b (see Figure 1a). This rim 3b is extending in the same direction as the separating part 7 is extending towards the connection part 5 and the rim 3b is provided for preventing a clam 13 positioned in the clamp supporting part 3 from sliding out from the curved support bar 3a. The rim 3b can in some embodiments of the invention be smaller towards outer edges 4c of the support bar 3a in order for facilitating positioning of the clamp 13 into the holder 1.

In the embodiment as shown in Figures 1-5 the clamp supporting part 3 comprises a drain 8. The drain 8 can be an opening positioned in the middle part 4a of the curved support bar 3a as can be seen in Figure 1a. The holder 1 can actually be provided to a fluid port 11 or a pipe/tube pointing in any direction, however, if the holder 1 is provided in a downward hanging position from the fluid port 11 as shown in Figures 2-4, a drain opening 8 can suitably be provided in the middle part 4a for drainage of any leakage. Alternatively, the drain can be another type of drainage device, for example a capillary device which by capillary action can transport liquid.

In the embodiment as shown in Figures 1-5 the connection part 5 of the holder 1 comprises two opposing resilient arms 5a, 5b configured for being snap fitted to the fluid port 11 (which could as well be one of two pipes or tubes to be connected). The two opposing resilient arms 5a, 5b are provided partly around the fluid port 11 and are held in place thanks to the resilience of the resilient arms 5a, 5b and possibly also thanks to locking features 5c which may be provided to the resilient arms 5a, 5b. By locking features 5c the holder 1 can be locked into a fixed position when the holder is attached to the fluid port 11. The locking feature 5c can for example be protrusions 5c, as shown in Figure 1a, which are configured to fit into recesses provided to the fluid port 11 for preventing the holder to rotate about the fluid port 11 when attached. Such locking features 5c are however not necessary in all embodiments, see for example Figure 6a. In some embodiments the pipe or fluid port 11 has been adopted for receiving such a holder 1 and provided with recesses and/or a designed surface configured for receiving the connection part 5 such that the connection part is locked in a suitable way to avoid rotation. In the embodiment as shown in Figures 2-4 such a designed surface 41 is provided to the fluid port 11 (see Figure 3) and comprises straight parts 43 on its sides and a recess 45, whereby the locking features 5c of the resilient arms 5a, 5b of the connection part 5 can be designed to snap into these recesses 45. Other alternatives for providing a rotation lock can for example be a protrusion of the connection part 5 which is received in a slot provided in the fluid port 11 which is shown in Figures 6d and 6e and which is described in further details below.

Alternative connection parts 5 are shown in Figures 6a-6e. In Figure 6a a similar connection part 105a as the connection part 5 shown in Figure 1a is shown with the difference that no locking features 5c are provided. The fluid port 11 can be cylindrical as shown in Figures 1-5. However, another form is also possible, such as a square form of the fluid port 11. In Figures 6b and 6c two connection parts 105b, 105c which are configured for attaching to square formed fluid ports 11 are shown. The connection parts 105b and 105c are identical, however it is shown that a form of the pipe from a square formed fluid port 11 can be both cylindrical or square formed. The same type of pipe connection device 101 can still be used and the holder 1 according to the invention can still be used for all these alternatives, only with different types of connection parts 5; 105a-105e as shown in Figures 6a-6e. The fluid ports 11 can also have other forms, such as rectangular, oval or any other shape and the connection part 5 of the holder 1 can be adopted accordingly. In Figure 6d a locking feature 5c is shown in the form of a protrusion received in a slot provided in the fluid port 11 as discussed above. Instead of a snap connection for connecting the holder to the fluid port the connection part 5 can in another embodiment as shown in Figure 6e comprise two separate parts 55a, 55b which are secured to each other around the fluid port 11.

In some embodiments of the invention the holder 1 is sized and configured to be used with a standard Tri-Clamp fitting or a Mini Tri-Clamp fitting.

The holder 1 can in some embodiments be integrated in for example the first flanged part 103a of a pipe connection device 101. Such an example is schematically shown in Figure 7a.

In Figure 7b a holder 1' according to another embodiment of the invention is schematically illustrated. In this embodiment the clamp supporting part 3' of the holder 1' comprises the clamp 13'. Hereby the clamp 13' can be integrated in the holder 1'. In another embodiment only a part of the clamp is integrated in the holder 1' (not shown).

The holder 1 can in some embodiments be configured for use in a bioprocess system or apparatus. Hereby the holder 1 can be configured and adapted for being used for supporting a clamp of a pipe connection device for use in a bioprocess apparatus.

The holder 1 can be made from a material suitable for use in a bioprocessing apparatus, such as a material which is suitable for sterilization and which is durable for chemicals. One suitable material can be polypropylene (PP), possibly with addition of a strengthening component such as lime or glass. Other possible materials to use for the holder can be polyamide (PA), and Polyoxymethylene (POM).

Also according to the invention, a set of holders 1 as described above is provided, wherein said set of holders comprises at least two different types of holders 1 where the two types of holders are visually distinguishable. For example at least two different colors or two different shapes can be used for the holders 1 such that for example inlets can be distinguished from outlets of the fluid ports 11 of a system 10.

Also according to the invention a system 10 is provided comprising at least one fluid port 11, wherein said system comprises at least one holder 1 according to the invention. In some embodiments of the invention said connection part 5 is permanently attached to said at least one fluid port 11. In one embodiment of the invention said system is a bioprocessing apparatus or a part of a bioprocessing apparatus. The holder 1 can be integrally formed into the system, such as by 3-d printing.

According to the invention a method for connecting two pipes is also provided. The pipe connection is provided by use of a pipe connection device 101 comprising a clamp and by use of a holder 1; 1' according to the invention. The method comprises the steps of:
- connecting the holder 1; 1' to one of the two pipes to be connected by the pipe connection device 101;
- supporting the clamp 13; 13' of the pipe connection device 101 in a supported position in the holder;
- providing the other of the two pipes to be connected in position for connection and providing remaining parts of the pipe connection device 101 in position for connection;
- closing the clamp 13; 13' directly from the supported position in the holder 1; 1' around the connection of the two pipes, hereby closing and sealing the pipe connection.

As will be understood by those skilled in the art, various embodiments of the present invention may be provided in which a sterile connection between two pipes can be made using only a single hand and directly adjacent a bioprocessing system (e.g. using a single handed manual operation). This is particularly advantageous for connecting such pipes in a bioprocessing system as it allows an operator to maintain one hand free, for example, for use in picking up further components, installing flow kits, accessing instruction manuals, etc.

## Claims

1. A method for connecting two pipes by use of a bioprocessing pipe connection device (101) comprising a clamp and by use of a holder (1; 1'), said holder (1) comprising:
- a clamp supporting part (3; 3') configured for supporting the clamp in a supported position;
- a connection part (5) configured for being attached to a first pipe of the two pipes to be connected by the pipe connection device (101); and
- a separating part (7) that connects said clamp supporting part (3; 3') and said connection part (5), said separating part (7) being configured for providing said clamp supporting part (3; 3') at a specific distance from the first pipe to which the connection part (5) is attached when the connection part (5) is attached to said first pipe, wherein said specific distance is such that a clamp (13; 13') of a pipe connection device (101) can be supported by the clamp supporting part (3; 3') such that the clamp (13; 13') can be closed for clamping the pipe connection device directly from the supported position in the clamp supporting part (3);
- said method comprising the steps of:
- connecting the holder (1; 1') to one of the two pipes to be connected by the pipe connection device (101);
- supporting the clamp (13; 13') of the pipe connection device (101) in a supported position in the holder;
- providing the other of the two pipes to be connected in position for connection and providing remaining parts of the pipe connection device (101) in position for connection;
- closing the clamp (13) directly from the supported position in the holder (1) around the connection of the two pipes, hereby closing and sealing the pipe connection.

2. The method according to claim 1, wherein the pipe connection device (101) is a Tri-Clamp fitting or an I-line fitting.

3. The method according to claim 1 or 2, wherein the connection part (5) is configured for being connected to a fluid port (11) of a system (10), to which fluid port (11) a pipe connection device (101) is to be used for connecting a pipe to the system (10), whereby said first pipe is the fluid port (11).

4. The method according to any one of the preceding claims, wherein said clamp supporting part (3) comprises a curved support bar (3a) in which the clamp can be held, whereby the curved support bar (3a) has a width (F) which is slightly larger than a width (G) of the clamp (13).

5. The method according to claim 4, wherein the curved support bar (3a) comprises a rim (3b) along one long side edge (33b), which rim (3b) is provided for preventing a clam (13) positioned in the clamp supporting part (3) from sliding out from the curved support bar (3a).

6. The method according to any one of the preceding claims, wherein the clamp supporting part (3) comprises a drain (8).

7. The method according to any one of the preceding claims, wherein said connection part (5) comprises two opposing resilient arms (5a, 5b) configured for being snap fitted to one of the two pipes to be connected.

8. The method according to any one of the preceding claims, wherein said connection part (5) comprises a locking feature (5c) by which the holder can be locked into a fixed position when the holder is attached to one of the two pipes to be connected.

9. The method according to any one of the preceding claims, sized and configured to be used with a standard Tri-Clamp fitting or a Mini Tri-Clamp fitting.

10. The method according to any one of the claims 1, 3, 6, 7 or 8, wherein said clamp supporting part (3') comprises at least a part of the clamp (13').

11. The method according to any one of the preceding claims, wherein at least one part (3; 3';5; 7) thereof comprises a polymer material and/or a strengthened polymer material, polypropylene (PP), polyamide (PA) and/or Polyoxymethylene (POM) and/or is sterilized.

12. The method according to any one of the preceding claims, wherein the holder (1; 1') is configured to be operated using a single hand.

13. The method according to any one of the preceding claims, wherein the steps are performed using only a single handed operation.

## Patentansprüche

1. Verfahren zum Verbinden von zwei Rohren durch Verwenden einer Verbindungsvorrichtung (101) für ein Bioverarbeitungsrohr, die eine Klemme umfasst, und durch Verwenden eines Halters (1; 1'), wobei der Halter (1) Folgendes umfasst:
- ein Klemmenstützteil (3; 3'), das so ausgebildet ist, dass es die Klemme in einer gestützten Position stützt;
- ein Verbindungsteil (5), das so ausgebildet ist, dass es an einem ersten Rohr der zwei Rohre befestigt wird, um durch die Verbindungsvorrichtung (101) für ein Rohr verbunden zu werden; und
- ein Trennteil (7), das das Klemmenstützteil (3; 3') und das Verbindungsteil (5) verbindet, wobei das Trennteil (7) so ausgebildet ist, dass es das Klemmenstützteil (3; 3') in einem konkreten Abstand vom ersten Rohr, an dem das Verbindungsteil (5) befestigt ist, bereitstellt, wenn das Verbindungsteil (5) an dem ersten Rohr befestigt ist, wobei der konkrete Abstand so ist, dass eine Klemme (13; 13') einer Verbindungsvorrichtung (101) für ein Rohr durch das Klemmenstützteil (3; 3') so gestützt werden kann, dass die Klemmen (13; 13') zum Klemmen der Verbindungsvorrichtung für ein Rohr direkt aus der gestützten Position im Klemmenstützteil (3) geschlossen werden kann;
- wobei das Verfahren die folgenden Schritte umfasst:
- Verbinden des Halters (1; 1') mit einem der zwei Rohre, um durch die Verbindungsvorrichtung (101) für ein Rohr verbunden zu werden;
- Stützen der Klemme (13; 13') der Verbindungsvorrichtung (101) für ein Rohr in einer gestützten Position im Halter;
- Bereitstellen des anderen der zwei Rohre, das in Position zum Verbinden verbunden werden soll, und Bereitstellen der verbleibenden Teile der Verbindungsvorrichtung (101) für ein Rohr in Position zum Verbinden;
- Schließen der Klemme (13) direkt aus der gestützten Position im Halter (1) um die Verbindung der zwei Rohre herum und dadurch Schließen und Abdichten der Rohrverbindung.

2. Verfahren nach Anspruch 1, wobei die Verbindungsvorrichtung (101) für ein Rohr ein Dreifachklemmenanschluss oder ein I-Line-Anschluss ist.

3. Verfahren nach Anspruch 1 oder 2, wobei das Verbindungsteil (5) so ausgebildet ist, dass es mit einem Fluidanschluss (11) eines Systems (10) verbunden wird, wobei an dem Fluidanschluss (11) eine Verbindungsvorrichtung (101) für ein Rohr zum Verbinden eines Rohrs mit dem System (10) verwendet werden soll, wobei das erste Rohr der Fluidanschluss (11) ist.

4. Verfahren nach einem der vorstehenden Ansprüche, wobei das Klemmenstützteil (3) eine gekrümmte Stützstange (3a) umfasst, auf der die Klemme gehalten werden kann, wobei die gekrümmte Stützstange (3a) eine Breite (F) aufweist, die geringfügig größer ist als eine Breite (G) der Klemmen (13).

5. Verfahren nach Anspruch 4, wobei die gekrümmte Stützstange (3a) einen Rand (3b) entlang einer langen Seitenkante (33b) umfasst, wobei der Rand (3b) so bereitgestellt ist, dass er verhindert, dass eine Klemme (13), die im Klemmenstützteil (3) positioniert ist, von der gekrümmten Stützstange (3a) abrutscht.

6. Verfahren nach einem der vorstehenden Ansprüche, wobei das Klemmenstützteil (3) einen Abfluss (8) umfasst.

7. Verfahren nach einem der vorstehenden Ansprüche, wobei das Verbindungsteil (5) zwei gegenüberliegende elastische Arme (5a, 5b) umfasst, die so ausgebildet sind, dass sie an eines der zwei zu verbindenden Rohre einrasten.

8. Verfahren nach einem der vorstehenden Ansprüche, wobei das Verbindungsteil (5) ein Verriegelungsmerkmal (5c) umfasst, durch das der Halter in einer fixen Position verriegelt werden kann, wenn der Halter an dem einen der zwei zu verbindenden Rohre befestigt ist.

9. Verfahren nach einem der vorstehenden Ansprüche, das so bemessen und ausgebildet ist, dass es mit einem standardgemäßen Dreifachklemmenanschluss oder einem Mini-Dreifachklemmenanschluss verwendet werden kann.

10. Verfahren nach einem der Ansprüche 1, 3, 6, 7 oder 8, wobei das Klemmenstützteil (3') mindestens einen Teil der Klemme (13') umfasst.

11. Verfahren nach einem der vorstehenden Ansprüche, wobei mindestens ein Teil (3; 3'; 5; 7) davon ein Polymermaterial und/oder ein verstärktes Polymermaterial, Polypropylen (PP), Polyamid (PA) und/oder Polyoxymethylen (POM) umfasst und/oder sterilisiert ist.

12. Verfahren nach einem der vorstehenden Ansprüche, wobei der Halter (1; 1') so ausgebildet ist, dass er unter Verwendung einer einzigen Hand betätigt werden kann.

13. Verfahren nach einem der vorstehenden Ansprüche, wobei die Schritte unter Verwendung einer Einhandbetätigung durchgeführt werden.

## Revendications

1. Procédé destiné à raccorder deux tuyaux à l'aide d'un dispositif de raccordement de tuyau (101) de biotraitement comprenant un collier et à l'aide d'un support (1; 1'), ledit support (1) comprenant :
- une partie de support de collier (3; 3') configurée pour supporter le collier dans une position supportée ;
- une partie de raccordement (5) configurée pour être fixée à un premier tuyau des deux tuyaux devant être raccordés par le dispositif de raccordement de tuyau (101) ; et
- une partie de séparation (7) qui raccorde ladite partie de support de collier (3; 3') et ladite partie de raccordement (5), ladite partie de séparation (7) étant configurée pour fournir ladite partie de support de collier (3; 3') à une distance spécifique du premier tuyau auquel la partie de raccordement (5) est fixée lorsque la partie de raccordement (5) est fixée audit premier tuyau,
dans lequel ladite distance spécifique est telle qu'un collier (13; 13') d'un dispositif de raccordement de tuyau (101) peut être supporté par la partie de support de collier (3; 3') de telle sorte que le collier (13; 13') puisse être fermé pour serrer le dispositif de raccordement de tuyau directement à partir de la position supportée dans la partie de support de collier (3) ;
- ledit procédé comprenant les étapes consistant à :
- raccorder le support (1; 1') à l'un des deux tuyaux devant être raccordés par le dispositif de raccordement de tuyau (101) ;
- supporter le collier (13; 13') du dispositif de raccordement de tuyau (101) dans une position supportée dans le support ;
- amener l'autre des deux tuyaux devant être raccordés en position pour le raccordement et amener les parties restantes du dispositif de raccordement de tuyau (101) en position pour le raccordement ;
- fermer le collier (13) directement à partir de la position supportée dans le support (1) autour du raccordement des deux tuyaux, fermant et étanchéifiant ainsi le raccordement de tuyaux.

2. Procédé selon la revendication 1, dans lequel le dispositif de raccordement de tuyau (101) est un raccord Tri-Clamp ou un raccord I-line.

3. Procédé selon la revendication 1 ou la revendication 2, dans lequel la partie de raccordement (5) est configurée pour être raccordée à un orifice de fluide (11) d'un système (10), vers lequel orifice de fluide (11) un dispositif de raccordement de tuyau (101) doit être utilisé pour raccorder un tuyau au système (10), moyennant quoi ledit premier tuyau est l'orifice de fluide (11).

4. Procédé selon l'une quelconque des revendications précédentes, dans lequel ladite partie de support de collier (3) comprend une barre de support courbe (3a) dans laquelle le collier peut être maintenu, moyennant quoi la barre de support courbe (3a) a une largeur (F) qui est légèrement supérieure à une largeur (G) du collier (13).

5. Procédé selon la revendication 4, dans lequel la barre de support courbe (3a) comprend un rebord (3b) le long d'un bord latéral long (33b), lequel rebord (3b) est prévu pour empêcher un collier (13) positionné dans la partie de support de collier (3) de glisser hors de la barre de support courbe (3a).

6. Procédé selon l'une quelconque des revendications précédentes, dans lequel la partie de support de collier (3) comprend un orifice de drainage (8).

7. Procédé selon l'une quelconque des revendications précédentes, dans lequel ladite partie de raccordement (5) comprend deux bras résilients opposés (5a, 5b) configurés pour être encliquetés sur l'un des deux tuyaux devant être raccordés.

8. Procédé selon l'une quelconque des revendications précédentes, dans lequel ladite partie de raccordement (5) comprend un élément de verrouillage (5c) par lequel le support peut être verrouillé dans une position fixe lorsque le support est fixé à l'un des deux tuyaux devant être raccordés.

9. Procédé selon l'une quelconque des revendications précédentes, dimensionné et configuré pour être utilisé avec un raccord Tri-Clamp standard ou un raccord Mini Tri-Clamp.

10. Procédé selon l'une quelconque des revendications 1, 3, 6, 7 ou 8, dans lequel ladite partie de support de collier (3') comprend au moins une partie du collier (13').

11. Procédé selon l'une quelconque des revendications précédentes, dans lequel au moins une partie (3 ; 3' ; 5 ; 7) de celui-ci comprend un matériau polymère et/ou un matériau polymère renforcé, du polypropylène (PP), du polyamide (PA) et/ou du polyoxyméthylène (POM) et/ou est stérilisé.

12. Procédé selon l'une quelconque des revendications précédentes, dans lequel le support (1; 1') est configuré pour être actionné en utilisant une seule main.

13. Procédé selon l'une quelconque des revendications précédentes, dans lequel les étapes sont réalisées en utilisant uniquement une opération à une seule main.
